(19) Europäisches Patentamt

European Patent Office

Office européen des brevets

(11) Publication number : **0 657 263 A1**

## (12) EUROPEAN PATENT APPLICATION

(21) Application number : 94309023.3

(22) Date of filing : 05.12.94

(51) Int. Cl.⁶ : **B29B 17/00,** C08J 11/10,
// B29K21:00

(30) Priority : 06.12.93 US 161341

(43) Date of publication of application :
**14.06.95 Bulletin 95/24**

(84) Designated Contracting States :
**DE ES FR GB IT**

(71) Applicant : **NATIONAL RUBBER
TECHNOLOGY INC.**
**394 Symington Avenue**
**Toronto, Ontario M6N 2Ws (CA)**

(72) Inventor : **Fisher, James F.**
**85 Weybridge Trail,**
**Brampton**
**Ontario, Canada L6B 3S4 (CA)**
Inventor : **Jury, James R.**
**19 Havenbrook Court, Brampton**
**Ontario, Canada L6S 2B4 (CA)**
Inventor : **Burgoyne, Michael D.**
**28 Rosefield Drive,**
**Georgetown**
**Ontario, Canada L7G 4RS (CA)**

(74) Representative : **Geering, Keith Edwin**
**REDDIE & GROSE**
**16 Theobalds Road**
**London WC1X 8PL (GB)**

(54) **Process for regeneration of rubber.**

㊸    Reclaim rubber is obtained from vulcanized rubber by subjecting a mass of the rubber to mechanical working applying highly intensive mechanical forces to the mass. The process is relatively energy efficient and therefore produces reclaim rubber at relatively low cost. It also mitigates the objectionable smell associated with known reclaim rubber products.

EP 0 657 263 A1

There have been prior attempts at treating cured (vulcanized) rubber scrap material to break it down in some manner to effectively regenerate it, and thereby provide a rubber material which can be recompounded, and subsequently molded and cured. The result of this process is a material usually known as reclaim rubber.

Known processes generally comprise the following:

a) swelling the rubber with oils and then treating with chemicals such as caustic soda, and steam distilling the mixture;

b) attacking the rubber as above, and then treating in a autoclave; and

c) applying specific wavelengths of micro-wave or radio-frequency radiation for lengthy periods of time.

These processes are not as energy-efficient as is desirable and costs of producing reclaim rubber by these processes are high. Moreover, with the known processes the reclaim rubber has an objectionable smell associated with it.

Applicants have now found a process whereby reclaim rubber can be produced relatively inexpensively and which mitigates the objectionable smell characteristic of known reclaim rubbers.

Applicants have found that when a mass preferably consisting substantially wholly of finely divided vulcanized rubber compound is subjected to high intensity mechanical forces, for example shearing forces, the rubber becomes substantially regenerated to the point that it can be effectively re-vulcanized. This process can be conducted rapidly, is highly efficient, and produces reclaim rubber at considerably less cost than the known processes. Moreover, the product is free from or has the above-mentioned objectionable smell associated with it to a lesser extent.

Various procedures and forms of apparatus may be used in carrying out the present process. Those skilled in the art of mixing, compounding and blending rubbers, elastomers and plastics are familiar with various forms of mixing, compounding and blending equipment capable of inducing high intensity shearing or other mechanical forces in a plastic mass and all such equipment may be used in carrying out the process of the invention. Examples of such equipment include BANBURY® mixers available from Farrell Corporation, Ansonia, Connecticut, FARRELL® continuous mixers, also available from Farrell Corporation, GELIMAT® mixer/compounders available from Draiswerke Inc., Allendale, New Jersey, similar equipment available from other manufacturers, and twin screw extruders. Such equipment may be operated in batch or continuous fashion.

The manner or mechanism by which the high intensity mechanical forces serve to effect regeneration is not presently fully understood but, without wishing to be bound by any theory, is considered to result from breakage of sulfur-sulfur or other crosslinking bonds and possibly breakage of carbon-carbon bonds.

In case of uncertainty it is in any event possible to determine by simple trial and experiment whether a given type of mixing, compounding or blending equipment provides sufficiently intensive mechanical forces to effect regeneration, by placing a small quantity of finely divided vulcanized rubber compound in the equipment and subjecting it to the mechanical action of the equipment at progressively increasing levels of power consumption until an indication of regeneration is obtained. It has been found that a useful indication of the onset of regeneration is given by the mass becoming tacky, and demonstrates 'green' rubber characteristics such as the ability to be blended on a mill into an integral sheet, and the ability to be re-vulcanized to a high percentage of the original physical properties, and this therefore provides a readily determined indicator of regeneration.

In the present invention, the mass is subjected to mechanical working applying forces sufficiently intensive and for a period such that the mass is substantially regenerated. The degree of regeneration is best determined by comparing the strength properties, such as tensile strengths, achieved on curing of the regenerated mass, with those achieved on curing, under similar conditions, of a chemically similar virgin (never vulcanized) rubber compound. For example, in the case of passenger car tire crumb, consisting of vulcanized styrenebutadiene rubber, the degree of regeneration may be determined by comparing its tensile strength after curing under standard conditions with those obtained after curing of a similar virgin styrene-butadiene rubber under the same conditions. Preferably, the degree of regeneration as indicated by such cured tensile strengths, as a percentage based on the cured tensile strengths achieved with the similar virgin rubbers, is at least about 35%, more preferably 45%, and still more preferably 55%.

Moreover, the degree of regeneration can be demonstrated by the reduction in the viscosity of the material, as compared with a dry powder blend of tire crumb and sulfur, with respect to the cure curve obtained when tested on equipment such as a Monsanto Oscillating Disc Rheometer.

It is known to compound mixtures of tire crumb, used as filler, together with uncrosslinked polymers or elastomers, in compounding equipment as described above. As far as the applicants are aware, however, regeneration of the tire crumb has not been reported, and it is suggested this is because, in such known compounding procedures, the forces applied are insufficiently intensive and the uncrosslinked polymer or elastomer serves as lubricant mitigating the mechanical action and insufficient heat is, or can be, developed within the mass to allow modification of the added tire crumb. In the process of the present invention, the tire crumb or other finely divided vulcanized rubber compound is preferably present as substantially the sole component of the mass undergoing regeneration. Preferably at least about 80%, more preferably at least about 90%, and still more preferably up to 100%, by weight of the mass consists of vulcanized rubber compound.

If desired the vulcanized rubber particles may be mixed with small quantities of various additives before subjecting them to the present process. Examples of such additives include hydrocarbon-based oils and conventional vulcanization inhibitor compounds such as phthalic anhydride, potassium phthalimide, phthalimide and tributylphosphite, which may be added in amounts of preferably no more than about 5%, based on the total weight of the mixture.

Preferably, the equipment used is such that it dissipates energy within the mass at a relatively high rate, so that regeneration is achieved in a short period, preferably of the order of a few seconds, for example about 2 to about 20 seconds. Preferably the rate of power dissipation is not less than about 1,000 watts per 100g of the mass undergoing the high intensity shearing action, otherwise the time taken to achieve regeneration may tend to be unacceptably long and hence the throughputs unacceptably low. Preferably, the rate is not greater than about 145,000 watts per 100g otherwise degradation of the rubber may tend to occur within such a short time span that the reaction may tend to be difficult to control. In the course of mechanically working the vulcanized rubber mass, it is important to avoid excessive working such that the rubber is degraded. Such degradation is indicated by the mass acquiring a crispy texture and a burnt smell and exhibiting little or no tensile strength on curing or being so friable or brittle in texture that it is difficult or impossible to mix it adequately with curing agents for the purpose of conducting tests of vulcanizability. Accordingly in the present invention the mass is subjected to highly intensive shearing or other mechanical action sufficient to regenerate the mass without substantially degrading it, to the point that it can be revulcanized as stated above. More preferably the rate of energy dissipation in the mass is about 4,000 to about 35,000 watts per 100g of the mass, still more preferably about 9,000 to about 17,000 watts per 100g.

In the case of many electrically-driven forms of equipment, the equipment as supplied by the manufacturer may be provided with an ammeter providing an indication from which the rate of power dissipation can be determined or calculated. The power dissipation rate of other forms of equipment can be readily determined by conventional procedures well known to those of skill in the art.

Preferably, the equipment employed comprises a rotary mixer having a stationary chamber that holds the mass undergoing regeneration and at least one mixer member rotating in the chamber. In the case in which the mixing element or elements extend generally radially within the chamber, the mechanical action can be described in terms of the shearing rate which is defined as the number of times per second that a mixing element passes through a given point on the path swept out by the element or elements in their rotation within the chamber. Preferably the mixer provides a shearing rate of about 50 to about 250, more preferably about 75 to about 200, reciprocal seconds.

By virtue of the highly intensive mechanical working to which the mass is subjected it will usually exhibit a fairly rapid rise in temperature during the course of the process. Preferably, the working is such that the mass exhibits an average rate of temperature rise, determined as the total temperature rise divided by the period during which the mass is subjected to the mechanical action, of about 5°C/sec to about 60°C/sec, more preferably about 10°C/sec to about 50°C/sec.

Typically, when the mass is subjected to mechanical working sufficient to achieve substantial regeneration, its temperature will rise to at least about 190°C. Working that is insufficient to raise the mass to at least this temperature is usually insufficient to achieve substantial regeneration. Preferably the temperature of the mass does not rise above about 250°C during the process, since exposure of the mass to such temperatures for more than a brief period may tend to result in degradation of the rubber.

As noted above, as regeneration commences, the mass tends to become tacky. The power consumed by the equipment, at least when operated at approximately constant speed, tends to increase as the regeneration proceeds and the mass becomes progressively more tacky. Further, as noted above, the temperature of the mass tends to increase during the course of the process. Applicants have found that, other conditions being equal, it is possible to monitor the degree of regeneration of the mass by observing the power consumption or rate of energy dissipation, or the maximum residence time within the mixing chamber, or both, and use the observed or measured values to control the process. For example, such values may be used to determine the point at which the mass is exited from the equipment in the case of batch operation, or to control the rate of throughput of the material in the case of continuous operation.

The process of the invention may be used to treat a wide variety of vulcanized rubber compound materials. The term "rubber compound" is used herein in the sense in which it would ordinarily be understood by those of skill in the art to refer to a blend of rubber with small quantities of compounding ingredients such as one or more of softeners, carbon black, curing agents, accelerators, activators, retarders, non-black pigments such as silica, organic reinforcing agents, loading materials, extenders and diluents, and anti-oxidants. For further discussion of typical rubber compounding procedures and ingredients, as well as of typical rubber compound compositions, reference may be made to, for example R.P.Dinsmore et al."The Processing and Compounding of GR-S", Synthetic Rubber, John Wiley & Sons, Inc. 1954, Chap. 11, p.373-424. Preferably, because of its wide availability and relatively low cost, the vulcanized rubber starting material is tire crumb obtained in the conventional manner by grinding road vehicle tires, for example passenger car tires or heavy service tires, for example truck, bus, aircraft, etc. tires, but other sources of scrap or discarded vulcanized rubber may of course be employed, such as roofing membrane, hose, gaskets and the like. Preferably, the tire crumb is substantially free from tire cord and metal.

In order to effectively regenerate the rubber within an acceptably short period, desirably the starting material rubber is in the form of finely divided particles. Preferably the particle size of the rubber is not greater than about 4 mesh (all mesh sizes herein refer to Tyler standard sieve). Preferably, the particle size is not less than about 200 mesh, since smaller particle sizes do not appear to result in significantly increased rates or degrees of regeneration, and tend to greatly increase the energy costs. More preferably the particle size is about 6 to about 60 mesh.

The invention will now be described in more detail by way of example only with reference to the following Examples and Comparative Example.

Examples 1 to 24 and Comparative Example

Tire crumb was regenerated using a GELIMAT G1 (trademark) mixer/compounder obtained from Draiswerke, Inc., Allendale, New Jersey, USA. This machine has a horizontally extending cylindrical chamber with a central shaft provided with staggered generally radially extending mixing elements. The shaft is rotated, at controllable rpm, by a 600v motor. Material to be treated, in the present Examples finely divided vulcanized rubber usually in the form of 100g batches, is introduced into the chamber through a top hopper with a locking slide. The chamber is equipped with an ammeter shaft drive measuring energy input or power dissipation. The outputs of these are fed to a microprocessor which controls a discharge door provided on the chamber. The device is settable so that when a given time or power dissipation peak or level is attained, the door is opened so that the mass is discharged rapidly from the chamber under the action of centrifugal force.

A number of runs were conducted at various rpms, and with discharge set to take place at various times or amperage peaks as indicated by the above mentioned equipment. In each case the actual temperature of the mass exiting the chamber was measured using a digital temperature probe and this temperature is referred to as the "eject temperature" in Table 1. Actual measurements of the temperature of the material in the chamber can be difficult and inaccurate due to the nature of the material, which is often black. By measuring the temperature of the ejected material at a range of power consumption levels an effective calibration can be obtained.

Thereafter, uniform ejection temperatures can be achieved by monitoring the unit power consumption.

The eject temperatures obtained over a large number of runs are given in Table 1, together with calculated shearing rates and power dissipation rates.

<u>Table 1</u>

| rpm | Shearing rate sec$^{-1}$ | Eject temp °C | Ampere Reading | Power dissipation watts/100 g |
|---|---|---|---|---|
| 3000 | 100 | 175 | – | – |
|  |  | 195 | – | – |
|  |  | 210 | 15.5 | 9,300 |
|  |  | 220 | 17 | 10,200 |
|  |  | 230 | 18.5 | 11,100 |
|  |  | 250 | 19.5 | 11,700 |
| 3500 | 117 | 210 | 18 | 10,800 |
|  |  | 220 | 19 | 11,400 |
|  |  | 230 | 20.5 | 12,300 |
|  |  | 250 | 22 | 13,200 |
| 4000 | 133 | 210 | 23 | 13,800 |
|  |  | 230 | 25 | 15,000 |
|  |  | 240 | 26 | 15,600 |
|  |  | 250 | 27 | 16,200 |

A number of runs were made at various rpms and eject temperatures. The vulcanized rubber batch charged to the machine for the reported experiments was, unless otherwise indicated, 8 mesh passenger car tire crumb (free from tire cord), either alone or in admixture with an additive. The percentages indicate the content of additive based on the total weight of the mixture. In each case the mixture was exited into a metal bucket and stirred to cool it quickly to reduce risk of degradation or combustion. Usually the interval between a batch entering and the reclaim product exiting the machine was about 8 to about 16 sec.

The degree of regeneration was determined by mixing the reclaim product in the following formulation:

| 47.6g | reclaim product |
| 0.71g | sulfur |
| 1.19g | zinc oxide |
| 0.48g | stearic acid |
| 0.36g | Delac accelerator. |

This mixture was blended in a Haake Bukler Rheocord 600 mixer for 7 min. at 80 rpm at 80°C.

The blended samples were placed in a heated mould (2mm thick copper frame between two copper sheets) that had been sprayed with silicone spray (LPS heavy duty silicone lubricant). The mould was placed into a press and gently pressed for 30 sec to allow some heating of the rubber. The pressure was increased to 1400 psi, held for 30 sec, released to allow any air pockets to dissipate, pressed at 960 psi for 30 sec, again released to allow air to escape, and then pressed for 6 minutes at the process temperature of 180°C (350°F) and at a pressure of 960 psi. The plates were removed and allowed to cool.

After allowing the plates and the process to cool, ASTM standard dumbbell samples were cut using a standard die. Cutting was done on a polyethylene cutting board and using the press to provide an even pressure on the die.

Tensile strengths and elongations at break of the samples were determined on an Instron Tensile Testing machine, calibrated using a 10 lbs weight and set to stretch the sample at 20 inch/min. The samples were loaded at an initial jaw spacing of 43.2 mm.

The results indicated in Table 2 are mean values obtained in each case from a series of five tests.

It was found that when the eject temperature was less than about 190°C, the mass did not become tacky and remained friable and insufficiently cohesive to be blended to form a coherent mixture and therefore cured tensile strength testing was not possible. When the eject temperature was above about 250°C, there was risk that the crumb became degraded and excessively tacky and would stick inside the GELIMAT chamber. In such case, the small portion ejected smoked profusely and quickly turned crispy. When cool, the sample smelled burnt and had no tackiness. The crispy degraded samples were not suitable for blending and could not be tested for cured tensile strengths.

## Table 2

| Example No. | Note | Rpm | Eject temp °C | Tensile psi | Elongation % |
|:-----------:|:----:|:----:|:-------------:|:-----------:|:------------:|
| 1. | - | 3000 | 250 | 465 | 121 |
| 2. | - | 3000 | 250 | 394 | 111 |
| 3. | (a) | 3000 | 250 | 454 | 151 |
| 4. | - | 3500 | 250 | 420 | 113 |
| 5. | (b) | 3500 | 250 | 471 | 128 |
| 6. | (c) | 3500 | 250 | 412 | 108 |
| 7. | - | 4000 | 210 | 462 | 125 |
| 8. | (d) | 4000 | 210 | 515 | 153 |
| 9. | (e) | 4000 | 210 | 502 | 144 |
| 10. | (f) | 4000 | 210 | 445 | 113 |

Table 2 (Continued)

| Example No. | Note | Rpm | Eject temp °C | Tensile psi | Elongation % |
|---|---|---|---|---|---|
| 11. | (g) | 4000 | 210 | 472 | 133 |
| 12. | (h) | 4000 | 210 | 469 | 124 |
| 13. | (j) | 4000 | 210 | 275 | 71 |
| 14. | (k) | 4000 | 210 | 411 | 115 |
| 15. | - | 4000 | 230 | 317 | 116 |
| 16. | - | 4000 | 250 | 408 | 116 |
| 17. | (l) | 4000 | 250 | 517 | 139 |
| 18. | (m) | 4000 | 250 | 525 | 145 |
| 19. | (u) | 4000 | 250 | 456 | 141 |
| 20. | (o) | 4000 | 250 | 487 | 144 |

Table 2 (Continued)

| Example No. | Note | Rpm | Eject temp °C | Tensile psi | Elongation % |
|---|---|---|---|---|---|
| 21. | (p) | 4000 | 250 | 457 | 168 |
| 22. | (q) | 4000 | 250 | 392 | 134 |
| 23. | (r) | 4000 | 250 | 458 | 137 |
| 24. | (s) | 4000 | 250 | 705 | 214 |
| Comparative Example | (t) | - | - | 990 | 207 |

Notes

(a)     Santogard PVI (prevulcanization inhibitor), 1% (all percentages based on the total weight of the mixture), dissolved in 3% hot aromatic oil was added to the tire crumb before treatment.

(b)     110 g of the tire crumb was added to the GELIMAT machine instead of 100 g.

(c)     90 g of the tire crumb was added to the GELIMAT machine instead of 100 g.

(d)     The tire crumb was 30 mesh instead of 8 mesh.

(e)     1% Santogard PVI was added to the tire crumb before treatment.

(f)     1% phathalic anhydride was added.

(g)     1% potassium phthalimide added.

(h)     1% phthalimide added.

(j)     2% phthalimide and 2% oil added.

(k)     2% oil added.

(l)     Results obtained with a portion of the reclaim rubber product which was stored for one week before curing.

(m)     Results obtained with a portion of the same product as Example 17, cured the same day.

(u)     1% Santogard PVI added.

(o)     2% Santogard PVI added.

(p)  1% tributylphosphite and 3% oil added.

(q)  1% Santogard PVI and 3% oil added.

(n)  1% potassium phthalimide added.

(s)  10 mesh truck tire crumb (having a content of vulcanized natural rubber) was substituted for the passenger car tire crumb.

(t)  47.6 g of virgin SBR rubber was substituted in the formulation given above, and was blended, cured and tested as described above.

Generally similar results were obtained by processing similar vulcanized rubber samples in a ZSK, 39:1 L/D twin screw extruder having the following twin screw configuration:

$1x^{10}/_{10}$, $2x^{42}/_{42}$, 5k, $2x^{42}/_{41}$, $2x^{28}/_{28}$, $3x^{45}/_{42}$ 5KB, $2x^{28}/_{28}$, $3x^{45}/_{42}$ 5KB, $1x^{10}/_{10}$ LH, $2X^{20}/_{20}$, 3x45-5-42, KB, $1x^{10}/_{10}$ LH, $2x^{20}/_{20}$, 5x45-5-28 KB, $1x^{10}/_{10}$ LH, $4x^{42}/_{42}$/ $4x^{20}/_{20}$, $4x^{14}/_{14}$

Feed rates from 14 to 37 g/min were used at screw speeds of 200 to 400 rpm. The barrel of the extruder was heated at temperatures of 200 to 250°C. The cured tensile strengths of the reclaim product obtained were on average about 15% lower than those achieved with the GELIMAT machine.

## Claims

1.  A process for regeneration of rubber comprising subjecting a mass comprising vulcanized rubber in finely divided form to mechanical working that applies high intensity mechanical forces to said mass and sufficient to substantially regenerate said rubber without substantially degrading said rubber such that a vulcanizable rubber mass is formed exhibiting on curing a tensile strength at least 35% that of similarly cured virgin rubber compound.

2.  A process according to claim 1 wherein said tensile strength is at least 45%, preferably at least 55% that of similarly cured virgin rubber compound.

3.  A process according to claim 1 or 2 wherein said high intensity forces dissipate energy in said mass at a rate of from 1,000 to 145,000, preferably 4,000 to 35,000 watts per 100 g of the weight of said mass.

4.  A process according to claim 1, 2 or 3 wherein said rubber is tire crumb, preferably passenger car or heavy service tire crumb.

5.  A process according to any preceding claim wherein said rubber has a particle size 4 to 200, preferably 6 to 60 mesh.

6.  A process according to any preceding claim wherein said high intensity forces raise the temperature of said mass at a rate of 5°C/sec to 60°C/sec, preferably 10°C/sec to 50°C/sec.

7.  A process according to any preceding claim wherein the step of subjecting said mass to mechanical working comprises processing said mass in a rotary mixer having a stationary chamber holding said mass and at least one mixer member rotating in said chamber.

8.  A process according to claim 7 wherein said mixer member comprises generally radially extending mixing elements rotating about an axis, and provides a shearing rate of 50 to 250 reciprocal seconds, preferably 75 to 200 reciprocal seconds.

9. A process according to any preceding claim wherein said mass is subjected to mechanical working in the presence of or in the absence of a vulcanization inhibitor.

## EUROPEAN SEARCH REPORT

| | European Patent Office | | Application Number |
|---|---|---|---|
| | | | EP 94 30 9023 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 074 344 (TRELLEBORG AB)<br><br>* the whole document * | 1,4,5,7,9 | B29B17/00<br>C08J11/10<br>//B29K21:00 |
| Y | INTERNATIONAL POLYMER SCIENCE AND TECHNOLOGY,<br>vol.8, no.12, 1981, SHAWBURY GB<br>pages 77 - 93<br>S. YAMASHITA 'RECLAIMED RUBBER FROM RUBBER SCRAP'<br>& NIPPON GOMU KYOKAISHI, no. 6, 1981, page 357<br>* page 84, right column, line 33 - page 88, left column, line 5 *<br>* specially table 13 * | 1,4,5,7,9 | |
| A | US-A-4 146 508 (BRYCE MAXWELL)<br>* the whole document * | 1,3,6-8 | |
| A | US-A-3 460 769 (HERBERT ALFRED MERGES)<br>* the whole document * | 1,3-5 | TECHNICAL FIELDS SEARCHED (Int.Cl.6) |
| A | US-A-2 461 192 (FERNLEY H. BANBURY ET AL.)<br>* the whole document * | 1,3,6,7 | B29B<br>C08J |
| A | DATABASE WPI<br>Section Ch, Week 8446,<br>Derwent Publications Ltd., London, GB;<br>Class AEC, AN 84-282735 C46!<br>& DD-A-211 575 (VEB REIFENW. FURSTENWALDE AND T. DIETZSCH) 18 July 1984<br>* abstract * | 1,9 | |

-/--

The present search report has been drawn up for all claims

| Place of search | Date of completion of the search | Examiner |
|---|---|---|
| THE HAGUE | 8 March 1995 | Molto Pinol, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 94 30 9023

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Section Ch, Week 9305,<br>Derwent Publications Ltd., London, GB;<br>Class AME, AN 93-043483 C05!<br>& SU-A-1 717 381 (KIEV BOLSHEVIK PRODN. ASSOC. CONS. BUR. AND KIEV SECT. RUBBER & LATEX) 7 March 1992<br>* abstract *<br>----- | 1,7,9 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 8 March 1995 | Molto Pinol, F |